# FASCICULE DE BREVET EUROPEEN

(11) **EP 3 405 437 B1**
(45) Date de publication et mention de la délivrance du brevet: **05.01.2022**
(21) Numéro de dépôt: 17700712.7
(22) Date de dépôt: 20.01.2017
(51) Int. Cl.: C02F 1/78, C02F 3/12

(54) **PROCÉDÉ DE TRAITEMENT D'EAUX RÉSIDUAIRES PAR OZONATION**
VERFAHREN ZUR BEHANDLUNG VON ABWASSER DURCH OZONIERUNG
PROCESS FOR TREATING WASTEWATERS BY OZONATION

(30) Priorité: 21.01.2016 FR 1650486
(43) Date de publication de la demande: 28.11.2018
(73) Titulaire: Suez International, 92040 Paris la Défense Cedex (FR)
(72) Inventeur: BAIG, Sylvie, 78360 Montesson (FR)
(74) Mandataire: IPAZ
(86) Numéro de dépôt international: PCT/EP2017/051245
(87) Numéro de publication internationale: WO 2017/125584

(56) Documents cités:
- WO-A1-99/41205
- WO-A1-2004/026773
- WO-A1-2011/053362
- US-A- 4 178 239
- US-A- 4 225 431
- US-B1- 6 780 319

## Description

### Domaine technique

La présente invention se rapporte au domaine du traitement des eaux résiduaires urbaines et/ou industrielles, aussi appelées eaux usées dans ce document.

Plus spécifiquement, la présente invention concerne un procédé permettant de traiter de telles eaux pour en éliminer des composés organiques et/ou inorganiques, en particulier des micropolluants persistants tels que des produits chimiques domestiques et industriels ainsi que leurs sous-produits, des pesticides, des produits pharmaceutiques, ou encore des produits de soins personnels.

### Etat de la technique antérieure

Les exigences de préservation des ressources en eau ont menées au déploiement de systèmes de traitement des eaux usées orientés sur des paramètres globaux. Aujourd'hui, l'Union européenne ambitionne de reconquérir la bonne qualité des milieux aquatiques. La Directive 2000/60/CE du Parlement européen et du Conseil du 23 octobre 2000, établissant un cadre pour une politique communautaire dans le domaine de l'eau, appelée Directive Cadre sur l'Eau (DCE), ambitionne de réduire progressivement à long terme des rejets de contaminants des eaux usées dans les milieux récepteurs aquatiques. Des boues d'épuration sont également produites au cours du traitement des eaux usées. Les concernant, la Directive 91/271/CEE du Conseil du 21 mai 1991, relative au traitement des eaux urbaines résiduaires, vise à encourager la valorisation des boues dès que possible. L'objectif de bon état chimique et écologique pour toutes les masses d'eau européennes implique l'adoption de mesures visant à contrôler les rejets, émissions et pertes pour les produits chimiques identifiés au niveau européen comme substances prioritaires et substances dangereuses prioritaires et fixés au niveau local / du bassin fluvial / national pour des substances pertinentes déterminées sur la base d'inventaires.

Les stations d'épuration constituent le principal point de collecte et ultérieurement de rejet de micropolluants dans l'environnement. Ces micropolluants appartiennent à différentes catégories qui reflètent toutes les utilisations de l'eau et leur diffusion dans l'environnement : produits chimiques domestiques et industriels et leurs sous-produits, pesticides, produits pharmaceutiques et produits de soins personnels. Les résultats publiés concernant les divers inventaires nationaux indiquent que la conception et le fonctionnement usuels des stations d'épuration biologique permettent une réduction limitée de la charge globale en micropolluants. En particulier, la charge des substances prioritaires de la DCE peut diminuer de 80%, alors que près de 80% de la charge totale en produits pharmaceutiques entrant dans les stations d'épuration urbaines du fait des émissions domestiques ou hospitalières peuvent être déversés dans les eaux de surface. Les polluants persistants sont caractérisés par une forte hydrophilie et une faible biodégradabilité (Techniques Sciences Méthodes, numéro 3, 2015, Dossier « L'élimination de micropolluants en station d'épuration domestique »).

Le comportement des micropolluants au cours de l'épuration biologique conventionnelle des eaux usées dépend de leurs propriétés physico-chimiques qui ouvrent comme voies d'élimination : volatilisation au cours du mélange et de l'aération, adsorption sur les matières solides en suspension et les boues, biodégradation, photodégradation à la surface de l'eau. Il apparaît en l'état que l'adsorption sur les boues constitue la voie d'élimination majeure des micropolluants objets de surveillance ce qui pose le problème du traitement ultérieur des boues.

Il est admis que plusieurs technologies procurent une certaine efficacité pour éliminer les composés organiques persistants des eaux usées. Ce sont les procédés biologiques secondaires spécifiques à âge de boues important comme les bioréacteurs à membrane ou les traitements tertiaires tels que la séparation membranaire, l'adsorption et l'oxydation chimique utilisant l'ozone ou les procédés d'oxydation avancée. Dans ce dernier domaine, le document US 2011/0259832 A1 décrit un procédé d'oxydation avancé combinant l'ozonation et l'irradiation ultraviolette, appliqué en traitement final des eaux usées afin de réaliser l'élimination des micropolluants et la désinfection.

Les traitements de type séparation physique présentent l'inconvénient majeur d'opérer le transfert des polluants en flux concentré pour les technologies membranaires, sur matériau pour les technologies d'adsorption, ce qui demande des traitements ultérieurs énergivores de destruction des déchets. Concernant les traitements avec réaction biologique ou chimique, il est essentiel de maîtriser la formation de sous-produits qui peuvent être plus toxiques que les composés parents.

Diverses applications de l'ozone sont connues pour le traitement des eaux usées en amont ou en aval d'un traitement biologique (Degrémont Water Treatment Handbook, 2005). Après traitement primaire ou secondaire, l'ozonation est utilisée pour la désinfection et/ou pour l'élimination d'une pollution organique spécifique telle que celle relative à des détergents, à des colorants, des composés toxiques, à des graisses et à des huiles ou pour abattre des indicateurs de pollution globaux comme la couleur, la demande chimique en oxygène avant la réutilisation d'eaux usées ou leur rejet. Des exemples de telles applications sont décrits dans les documents US 4 178 239 A, WO 2012/122562 A2, US 2012/0012525 A1, US 2011/0100911 A1, US 2011/0259832 A1, WO 2007/053110 A1, CA 1141044 A. Les documents US 6 780 319 B1, WO 2004/026773 A1 décrivent des applications dans lesquelles l'oxydation à l'ozone est intégrée aux procédés biologiques pour réduire la production de boues dans les systèmes aérobies.

En particulier, l'art antérieur propose des techniques de mise en œuvre de l'ozone pour l'oxydation des polluants organiques ou inorganiques des eaux toutes basées sur l'utilisation de réacteurs (contacteurs) spécifiques. Les réacteurs majoritairement rencontrés sont du type colonne de contact à travers laquelle les eaux à traiter circulent, ces colonnes étant équipées de diffuseurs pour produire à leur base des bulles à partir d'une alimentation en air ou oxygène ozoné. Pour assurer une oxydation efficace et le meilleur taux de transfert en ozone, il est nécessaire d'opérer le contact entre les eaux et l'ozone pendant un temps suffisamment long, ce qui implique des réacteurs d'une certaine taille. En particulier, le transfert d'ozone augmente avec la hauteur de la colonne de sorte que les colonnes industrielles ont une hauteur typiquement comprise entre quatre et sept mètres (Degrémont Water Treatment Handbook, 2005).

L'invention a notamment pour but de remédier à tout ou partie des inconvénients des techniques de traitement d'eaux de l'état de la technique antérieure.

### Exposé de l'invention

A cet effet, la présente invention propose un procédé de traitement d'eaux résiduaires comprenant au moins une étape de traitement biologique aérobie des eaux résiduaires dans un réacteur biologique, le dit procédé comprenant en outre une étape au cours de laquelle de l'ozone est injecté directement et sans contacteur spécifique dans un ou plusieurs circuits agencés pour acheminer un fluide respectif dans le réacteur biologique.

Le fait d'injecter de l'ozone directement et sans contacteur spécifique dans un ou plusieurs circuits agencés pour acheminer un fluide dans le réacteur biologique, signifie qu'il n'y a pas de contacteur entre le point d'injection de l'ozone et le réacteur. On entend par contacteur à ozone, tout dispositif comprenant une enceinte dans laquelle le fluide à traiter est retenu selon une durée déterminée afin d'être mis en contact avec l'ozone. Les contacteurs à ozone sont généralement des colonnes à bulles, des réacteurs à turbine, des colonnes à garnissage.

Ainsi, la présente invention propose un procédé de traitement d'eaux résiduaires intégrant de manière synergique une oxydation chimique à l'ozone et une oxydation biologique au sein du réacteur biologique, permettant d'oxyder par voie biologique et par voie chimique des composés organiques et/ou inorganiques présents dans lesdites eaux résiduaires.

L'au moins une étape de traitement biologique peut consister en un traitement aérobie, par exemple par boues activées.

La présente invention procure de nombreux avantages par rapport aux techniques conventionnelles de traitement d'eaux résiduaires, en permettant notamment :
- en comparaison avec un procédé mettant en œuvre un traitement biologique conventionnel :
   ∘ d'obtenir de meilleures performances dans l'abattement des composés organiques et/ou inorganiques, notamment dans l'abattement de micropolluants persistants, présents dans les eaux résiduaires,
   ∘ de diminuer la teneur en composés organiques et/ou inorganiques, notamment en micropolluants persistants, des boues produites par le traitement biologique ;

- en comparaison avec une application d'ozone en traitement tertiaire ou post-traitement telle que décrite dans l'état de la technique antérieure, c'est-à-dire une application dans laquelle de l'ozone est introduit après le traitement biologique :
   ∘ de réduire la quantité d'ozone,
   ∘ de réduire la taille du dispositif,
   ∘ de faciliter le contrôle de la toxicité induite, d'une part grâce à la réduction de la dose d'ozone appliquée en sortie du réacteur biologique et d'autre part en produisant une dégradation déjà en amont ;
- de réduire les temps de contact réalisés sans contacteur spécifique ;
- de ne pas produire de concentrat et de ne pas user un matériau adsorbant, en comparaison avec un traitement mettant en œuvre des techniques séparatives membranaires ou d'adsorption.

Selon l'invention, l'étape d'ozonation comporte une injection d'ozone dans un circuit d'arrivée d'eaux résiduaires au moyen d'un premier dispositif d'injection, de type injecteur ou mélangeur statique.

Ainsi les eaux résiduaires constituent le fluide acheminé par ledit circuit d'arrivée dans le réacteur biologique.

Une telle injection d'ozone dans le circuit d'arrivée d'eaux résiduaires permet d'agir de manière renforcée sur les matériaux hydrophobes présents dans les eaux résiduaires, de manière à les rendre hydrophiles. Ceci permet de faciliter le traitement de ces matériaux dans la suite du procédé, en particulier lors de l'étape de traitement biologique aérobie.

Le fait d'injecter de l'ozone directement et sans contacteur spécifique dans un ou plusieurs circuits agencés pour acheminer les eaux résiduaires dans le réacteur biologique, permet d'amorcer directement dans le circuit et à partir du point d'injection, un début d'oxydation des eaux résiduaires. Compte tenu de la vitesse du flux dans ces circuits et de l'absence de contacteur, l'oxydation des composés n'est que partielle. Ainsi, les eaux résiduelles arrivent sans délai supplémentaire dans le réacteur sous une forme conditionnée qui facilite leur digestion. En d'autres termes, l'oxydation chimique partielle qui débute dans le flux lors de l'injection d'ozone prépare les eaux résiduaires, de sorte que l'oxydation biologique dans le réacteur se trouve facilitée. C'est en ce sens que, l'oxydation chimique à l'ozone agit en synergie avec l'oxydation biologique au sein du réacteur biologique.

Selon l'invention, la quantité d'ozone injecté dans le circuit d'arrivée d'eaux résiduaires au cours de l'étape d'ozonation est e inférieure ou égale à deux gramme par gramme de carbone organique total des eaux résiduaires.

Dans un mode de réalisation, le procédé peut comprendre en outre étape de séparation au cours de laquelle des boues sont séparées des eaux résiduaires cette étape de séparation étant ultérieure à l'au moins une étape de traitement biologique aérobie, les boues issues de cette étape de séparation étant acheminées dans le réacteur biologique par un circuit de recirculation, et l'étape d'ozonation pouvant comporter une injection d'ozone dans ce circuit de recirculation au moyen d'un deuxième dispositif d'injection, par exemple de type injecteur ou mélangeur statique.

Cette étape de séparation peut être réalisée par un décanteur ou un flottateur ou des membranes par exemple.

Ainsi, dans ce mode de réalisation, les boues biologiques entrent dans la composition du fluide acheminé par ledit circuit de recirculation dans le réacteur biologique.

Une telle injection d'ozone dans un tel circuit de recirculation permet de diminuer la concentration des composés adsorbés sur les boues par action de l'ozone.

De préférence, la quantité d'ozone injecté dans le circuit de recirculation au cours de l'étape d'ozonation peut être inférieure ou égale à deux gramme par gramme de carbone organique total des eaux résiduaires.

Dans un mode de réalisation, le procédé peut comprendre en outre une étape de post-traitement par ozonation au cours de laquelle les eaux résiduaires sortant du réacteur biologique sont mises en contact avec de l'ozone au sein d'un contacteur. Ce contacteur peut typiquement être un contacteur d'ozonation dédié à un traitement de finition.

De préférence, la quantité d'ozone mis en contact avec les eaux résiduaires dans le contacteur au cours de l'étape de post-traitement d'ozonation est inférieure ou égale à deux gramme par gramme de carbone organique total des eaux résiduaires.

De préférence, dans ce mode de réalisation, le procédé peut comprendre en outre une étape de recyclage de gaz au cours de laquelle une partie au moins de l'ozone mis en contact avec les eaux résiduaires dans le contacteur est recirculée vers le premier et/ou le deuxième dispositif d'injection, et/ou est injecté dans une zone d'aération du réacteur biologique.

Décrit est aussi un dispositif de traitement d'eaux résiduaires pour la mise en œuvre d'un procédé selon l'invention, comprenant :
- un réacteur biologique agencé pour réaliser au moins une étape de traitement biologique aérobie des eaux résiduaires,
- un ou plusieurs circuits agencés pour acheminer un fluide respectif dans le réacteur biologique,
ce dispositif comprenant en outre au moins un dispositif d'injection, par exemple de type injecteur ou mélangeur statique, agencé pour injecter directement et sans contacteur spécifique, de préférence en ligne, de l'ozone dans l'un ou plusieurs desdits un ou plusieurs circuits.

Le dispositif peut comprendre :
- un circuit d'arrivée d'eaux résiduaires agencé pour acheminer les eaux résiduaires dans le réacteur biologique, et
- un premier dispositif d'injection agencé pour injecter de l'ozone dans le circuit d'arrivée.

Ainsi les eaux résiduaires constituent le fluide acheminé par ledit circuit d'arrivée dans le réacteur biologique.

Le dispositif peut comprendre en outre :
- un séparateur en aval du réacteur biologique agencé pour séparer des boues des eaux résiduaires,
- un circuit de recirculation agencé pour acheminer les boues dans le réacteur biologique,
- un deuxième dispositif d'injection agencé pour injecter de l'ozone dans le circuit de recirculation.

Ainsi le fluide acheminé par ledit circuit de recirculation dans le réacteur biologique contient des boues biologiques.

Le séparateur peut être, par exemple, du type décanteur ou flottateur ou membranes.

Le dispositif peut comprendre en outre un contacteur agencé pour mettre en contact les eaux résiduaires sortant du réacteur biologique avec de l'ozone. Ce contacteur peut comprendre une colonne de contact et consiste typiquement en un contacteur d'ozonation dédié à un traitement de finition.

Le réacteur biologique peut comprendre une zone d'aération, et le dispositif peut comprendre en outre un circuit de recyclage agencé pour acheminer une partie au moins de l'ozone mis en contact avec les eaux résiduaires dans le contacteur vers :
- l'au moins un dispositif d'injection, et/ou
- ladite zone d'aération.

Le réacteur biologique peut être un réacteur à boues activées conventionnel ou un réacteur à lit mobile ou un réacteur à lit fixe.

L'ozone peut être gazeux ou dissous. De préférence, il est utilisé sous forme gazeuse.

De préférence, l'ozone, en particulier lorsqu'il est gazeux, peut comprendre de l'oxygène. La concentration d'ozone dans le gaz peut varier entre de 0.001% à 20% en masse.

En outre, la dose d'ozone injectée peut être contrôlée à l'aide d'une mesure du potentiel redox des eaux résiduaires.

Dans différentes combinaisons des modes de réalisation décrits ci-dessus, le procédé selon l'invention, en réalisant une application multiple de l'ozone, permet la détoxification des eaux résiduaires à traiter, aussi appelées effluent brut ou primaire, notamment pour :
- une stabilisation et/ou une amélioration de la biodégradation des composés organiques et/ou inorganiques tels que des micropolluants,
- une désorption des composés organiques et/ou inorganiques tels que des micropolluants parents ou métabolites adsorbés sur les matières en suspension dans le circuit de recirculation pour biodégradation ultérieure, et
- une oxydation de finition desdits composés organiques et/ou inorganiques ainsi que des produits d'oxydation.

Plus généralement, le procédé selon l'invention exacerbe les avantages de l'ozonation au service de l'efficacité du traitement biologique sous l'effet de :
- la conversion facile des produits toxiques et des composés hydrophobes non biodégradables à l'entrée du traitement biologique,
- l'attaque rapide de micropolluants adsorbés sur les boues dans le circuit de recirculation,
- l'amélioration de la vitesse de biodégradation grâce à la promotion de la croissance de certains microorganismes et grâce à l'apport d'oxygène en recyclant le gaz ozoné mis en contact avec les eaux résiduaires dans le contacteur d'ozonation dédié au traitement de finition.

### Description des figures et modes de réalisation

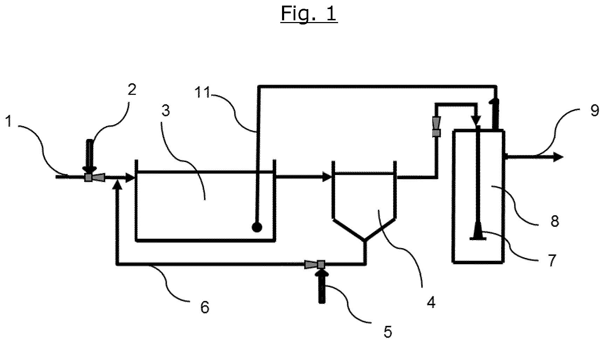

D'autres avantages et particularités de l'invention apparaîtront à la lecture de la description détaillée de mises en œuvre et de modes de réalisation nullement limitatifs, et de la FIGURE 1 annexée.

Les modes de réalisation décrits ci-après étant nullement limitatifs, on pourra notamment considérer des variantes de l'invention ne comprenant qu'une sélection de caractéristiques décrites, isolées des autres caractéristiques décrites, même si cette sélection est isolée au sein d'une phrase comprenant ces autres caractéristiques, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

La FIGURE 1 représente de manière schématique un dispositif de traitement d'eaux pour la mise en œuvre d'un procédé selon l'invention.

Le dispositif comprend un réacteur biologique 3 comprenant, alternativement, un réacteur à boues activées conventionnel ou un réacteur à lit mobile ou un réacteur à lit fixe.

On entend par « réacteur à boues activées conventionnel », un bassin d'aération auquel succède généralement un clarificateur, l'épuration des eaux usées s'effectuant ainsi suivant une succession de bassins disposés les uns derrières les autres.

On entend par « réacteur à lit mobile » ou « réacteur à lit mobile fluidisé », un bassin d'aération (ou à aération séquencée) dans lequel sont immergés des matériaux supports maintenus en fluidisation pas l'apport d'air de procédé et permettant d'augmenter la quantité de biomasse épuratrice, celle qui se développe sur les surfaces des matériaux immergés. De cette manière, on obtient l'avantage d'augmenter la capacité de traitement vis-à-vis d'un réacteur biologique à boues activées conventionnel en conférant pour la même charge à traiter, un volume de réacteur plus faible.

On entend par « réacteur à lit fixe », des filtres garnis de matériaux minéraux au sein desquelles traverse l'eau à épurer. De cette manière, on obtient l'avantage de filtrer en même temps l'eau épurée en une seule étape de traitement.

Le dispositif comprend en outre un circuit d'arrivée 1 d'eaux résiduaires agencé pour alimenter le réacteur biologique 3 en eaux résiduaires.

Les eaux résiduaires acheminées dans le réacteur biologique 3 par le circuit d'arrivée 1 arrivent plus précisément dans une zone, ou bassin, d'aération de ce réacteur.

Dans cet exemple, le réacteur biologique 3 est agencé pour réaliser au moins une étape de traitement biologique aérobie, par exemple par boues activées. En particulier, les eaux résiduaires situées dans le réacteur biologique 3 sont mises en contact avec des bactéries capables d'oxyder par voie biologique des composés organiques et/ou inorganiques présents dans les eaux résiduaires. Autrement dit, l'au moins une étape de traitement biologique par boues activées permet de dégrader de tels composés par ces bactéries.

Après avoir été soumises à l'au moins une étape de traitement biologique aérobie, les eaux résiduaires sortent du réacteur biologique 3.

Dans l'exemple de la FIGURE 1, les eaux résiduaires sortant du réacteur biologique 3 sont acheminées vers un séparateur 4, par exemple de type clarificateur ou bassin de décantation secondaire ou décanteur, monté en aval du réacteur biologique 3. Le séparateur 4 est agencé pour réaliser une étape de décantation au cours de laquelle on sépare typiquement des flocs biologiques des eaux résiduaires, ces flocs biologiques étant constitués lors de l'étape de traitement biologique aérobie, au sein du réacteur biologique 3.

Dans cet exemple, les boues issues de cette étape de décantation sont acheminées dans le réacteur biologique 3 par un circuit de recirculation 6.

Dans un exemple, le réacteur biologique 3 peut comporter une entrée commune pour le circuit d'arrivée 1 et le circuit de recirculation 6. Alternativement, une entrée séparée pour chacun de ces deux circuits 1 et 6 peut être prévue (non représenté).

Le dispositif de la FIGURE 1 comprend un outre un premier 2 et un deuxième 5 dispositif d'injection. Dans cet exemple, le premier dispositif d'injection 2 est agencé pour injecter directement et sans contacteur spécifique de l'ozone, de préférence sous forme gazeuse, dans le circuit d'arrivée 1 d'eaux résiduaires ; le deuxième dispositif d'injection 5 est agencé pour injecter directement et sans contacteur spécifique de l'ozone, de préférence sous forme gazeuse, dans le circuit de recirculation 6. Alternativement, le dispositif pourrait comprendre un seul de ces deux dispositifs d'injection (non représenté). Le premier 2 et/ou le deuxième 5 dispositif d'injection est par exemple un injecteur ou mélangeur statique installé dans le circuit d'arrivée 1 ou dans le circuit de recirculation 6 sans contacteur spécifique.

Par ce premier 2 et/ou deuxième 5 dispositif d'injection, on peut introduire, au cours de l'au moins une étape de traitement biologique aérobie, de l'ozone de manière à oxyder par voie biologique et par voie chimique des composés organiques et/ou inorganiques présents dans lesdites eaux résiduaires. L'oxydation chimique partielle qui débute dans le flux lors de l'injection d'ozone prépare les eaux résiduaires, de sorte que le traitement biologique aérobie dans le réacteur se trouve facilité. De cette façon, l'oxydation chimique à l'ozone agit en synergie avec l'oxydation biologique au sein du réacteur biologique 3.

Le dispositif peut comprendre en outre un contacteur 8 agencé pour mettre en contact les eaux résiduaires sortant du réacteur biologique 3, et sortant dans l'exemple de la FIGURE 1 du séparateur 4, avec de l'ozone. On réalise ainsi un post-traitement par ozonation.

Dans cet exemple, le contacteur 8 comprend une colonne de contact dans laquelle sont placées les eaux résiduaires, et leur mise en contact avec l'ozone est réalisée à l'aide d'un diffuseur 7.

Les eaux résiduaires ayant subies un tel post-traitement par ozonation sont évacuées par un circuit d'évacuation 9.

Le dispositif de la FIGURE 1 comprend en outre un circuit de recyclage 11 agencé pour acheminer une partie au moins de l'ozone mis en contact avec les eaux résiduaires dans le contacteur 8 vers la zone d'aération du réacteur biologique 3, constituant une étape de recyclage de gaz. Alternativement ou de manière additionnelle, de l'ozone ainsi récupéré au contacteur 8 peut être acheminé vers le premier 2 et/ou le deuxième 5 dispositif d'injection (non représenté).

Selon l'invention, l'ozone introduit au cours de l'au moins une étape de traitement biologique aérobie constitue une quantité inférieure ou égale à deux grammes par gramme de carbone organique total des eaux résiduaires.

Les inventeurs ont testé l'efficacité du procédé selon l'invention à l'aide des deux situations mettant en œuvre un réacteur biologique 3 et un contacteur 8 comprenant une colonne d'ozonation à contre-courant de gaz et d'eau.

Dans chacune des deux situations, le même effluent primaire urbain alimentait le dispositif à un débit de 1 m³/h, le temps de rétention des eaux résiduaires dans le réacteur biologique 3 était de 10 h, la concentration en boues était de 3,5 g/L et l'âge de boues était de 10 jours.

La première situation, consistant en un traitement conventionnel, est caractérisée par les éléments suivants :
- absence de dispositif d'injection sur le circuit d'arrivée 1 et le circuit de recirculation 6 ;
- temps de contact de 15 min dans le contacteur 8 et dose d'ozone injectée dans le contacteur 8 de 17 mg/L.

La deuxième situation, consistant en un traitement selon l'invention, est caractérisée par les éléments suivants :
- présence de deux dispositifs d'injection 2 et 5 consistant en des hydroéjecteurs de gaz ;
- présence d'un circuit de recyclage 11 acheminant, après compression, du gaz prélevé à l'évent de la colonne d'ozonation 8 vers la zone d'aération du réacteur biologique 3 ;
- doses d'ozone injecté par les dispositifs d'injection 2 et 5 respectivement de 7 mg/L ;
- temps de contact de 5 min dans le contacteur 8 et dose d'ozone injectée dans le contacteur 8 de 5 mg/L.

Un programme d'échantillonnage a été effectué après une période d'observation de régime stable pendant plusieurs mois sur la base de performances en termes d'indicateurs de pollution agrégés. La méthodologie d'échantillonnage appliquée pour l'analyse des micropolluants était basée sur le prélèvement d'échantillons moyens journaliers proportionnels au débit, conservés au froid, combiné à l'utilisation de matériel en verre et en Téflon, et un acheminement des échantillons vers les laboratoires dans un délai inférieur à 24 h. Les prélèvements ont été réalisés par temps sec, pendant 2 à 3 jours consécutifs.

Le tableau ci-dessous résume les résultats obtenus pour ce qui concerne les micropolluants détectés en entrée de filière et persistants à l'issue du traitement biologique par boues activées. Un rendement de 100 % est obtenu dès lors que la substance n'est plus détectée dans l'effluent traité.

| **Composé** | **Concentration dans l'effluent primaire en µg/L** | **Taux d'élimination en %** | |
|---|---|---|---|
| | | **Situation 1** | **Situation 2** |
| Carbamazepine | 0,17 | 100 | 100 |
| Diclofenac | 0,93 | 100 | 100 |
| Roxithromycin | 0,40 | 98 | 100 |
| Sulfamethoxazole | 0,47 | 99 | 100 |
| Nonylphenols | 3,30 | 92 | 97 |
| Diuron | 1,08 | 96 | 100 |
| Chlofenvinphos | 1,75 | 86 | 100 |
| Atrazine | 0,93 | 70 | 100 |

Ces résultats indiquent que le procédé et le dispositif selon l'invention (situation 2), par comparaison avec un procédé et dispositif ne faisant pas intervenir une oxydation par voie biologique et par voie chimique de manière synergique (situation 1), permet un meilleur abattement concernant les substances en l'occurrence toujours détectées dans l'effluent issu de la filière de référence. En outre, ces meilleures performances ont été obtenues en appliquant une dose d'ozone globale réduite de 30 %.

Bien sûr, la présente invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres. La portée de l'invention est définie par les revendications ci-jointes.

## Revendications

1. Procédé de traitement d'eaux résiduaires comprenant au moins une étape de traitement biologique aérobie des eaux résiduaires dans un réacteur biologique (3), et une étape d'ozonation comportant une injection d'ozone dans un circuit d'arrivée (1) des eaux résiduaires agencé pour acheminer les eaux résiduaires dans le réacteur biologique (3), l'oxydation chimique à l'ozone agissant ainsi en synergie avec l'oxydation biologique au sein du réacteur biologique (3), le procédé étant **caractérisé en ce que** :
- l'injection d'ozone dans le circuit d'arrivée (1) d'eaux résiduaires se fait au moyen d'un premier dispositif d'injection (2) de type injecteur ou mélangeur statique et sans contacteur spécifique, entre le point d'injection de l'ozone et le réacteur biologique (3), c'est-à-dire sans dispositif comprenant une enceinte dans laquelle les eaux résiduaires à traiter sont retenues selon une durée déterminée afin d'être mises en contact avec l'ozone,
- la quantité d'ozone injecté dans le circuit d'arrivée (1) d'eaux résiduaires au cours de l'étape d'ozonation est inférieure ou égale à deux grammes par gramme de carbone organique total des eaux résiduaires.

2. Procédé selon la revendication 1, **caractérisé en ce qu'**il comprend en outre une étape de séparation au cours de laquelle des boues sont séparées des eaux résiduaires issues du réacteur biologique (3), cette étape de séparation étant en effet ultérieure à l'au moins une étape de traitement biologique aérobie, **en ce que** les boues issues de cette étape de séparation sont acheminées dans le réacteur biologique (3) par un circuit de recirculation (6), et **en ce que** l'étape d'ozonation comporte une injection d'ozone dans ce circuit de recirculation (6) au moyen d'un deuxième dispositif d'injection (5) de type injecteur ou mélangeur statique et sans contacteur spécifique, entre le point d'injection de l'ozone et le réacteur biologique (3), c'est-à-dire sans dispositif comprenant une enceinte dans laquelle les eaux résiduaires à traiter sont retenues selon une durée déterminée afin d'être mises en contact avec l'ozone.

3. Procédé selon la revendication 2, caractérisé en que la quantité d'ozone injecté dans le circuit de recirculation (6) au cours de l'étape d'ozonation est inférieure ou égale à deux gramme par gramme de carbone organique total des eaux résiduaires.

4. Procédé selon l'une quelconque des revendications 1 à 3, **caractérisé en ce qu'**il comprend en outre une étape de post-traitement par ozonation au cours de laquelle les eaux résiduaires sortant du réacteur biologique (3) sont mises en contact avec de l'ozone au sein d'un contacteur (8).

5. Procédé selon la revendication 4, **caractérisé en ce que** la quantité d'ozone mis en contact avec les eaux résiduaires dans le contacteur (8) au cours de l'étape de post-traitement d'ozonation est inférieure ou égale à deux grammes par gramme de carbone organique total des eaux résiduaires.

6. Procédé selon la revendication 4 ou 5 considérée comme dépendante de la revendication 2, **caractérisé en ce qu'**il comprend en outre une étape de recyclage de gaz au cours de laquelle une partie au moins de l'ozone mis en contact avec les eaux résiduaires dans le contacteur (8) est recirculée vers le premier et/ou le deuxième dispositif d'injection, et/ou est injectée dans une zone d'aération du réacteur biologique (3).

7. Procédé selon l'une quelconque des revendications 1 à 6, **caractérisé en ce que** l'ozone injecté est gazeux ou dissous.

8. Procédé selon l'une quelconque des revendications 1 à 7, **caractérisé en ce que** l'ozone est injecté sous forme d'un gaz comprenant de l'ozone et de l'oxygène.

## Patentansprüche

1. Verfahren zur Behandlung von Abwässern mit mindestens einem Schritt der aeroben biologischen Behandlung der Abwässer in einem biologischen Reaktor (3), und einem Ozonierungsschritt mit einer Ozoneinspritzung in eine Abwasserzuführleitung (1), die zum Leiten der Abwässer in den biologischen Reaktor (3) angeordnet ist, wobei die chemische Oxydation durch Ozon auf diese Weise in Synergie mit der biologischen Oxidation im Inneren des biologischen Reaktors (3) wirkt, wobei das Verfahren **dadurch gekennzeichnet ist, dass**:
- die Ozoneinspritzung in die Abwasserzuführleitung (1) mittels einer ersten Einspritzvorrichtung (2) vom Typ eines Injektors oder statischen Mischers und ohne spezifischen Kontaktor zwischen dem Ozoneinspritzpunkt und dem biologischen Reaktor (3) erfolgt, d.h. ohne eine Vorrichtung mit Gehäuse, in welchem die zu behandelnden Abwässer für eine bestimmte Dauer gehalten werden, um in Kontakt mit dem Ozon gebracht zu werden,
- die während des Ozonierungsschritts in die Abwasserzuführleitung (1) eingespritzte Ozonmenge geringer als oder gleich zwei Gramm pro Gramm des gesamten organischen Kohlenstoffs der Abwässer ist.

2. Verfahren nach Anspruch 1, **dadurch gekennzeichnet, dass** es ferner einen Trennschritt aufweist, während welchem Schlämme von den aus dem biologischen Reaktor (3) austretenden Abwässern getrennt werden, wobei dieser Trennschritt dem mindestens einen Schritt der aeroben biologischen Behandlung folgt, dass die aus diesem Trennschritt resultierenden Schlämme über eine Rückführleitung (6) in den biologischen Reaktor (3) geleitet werden, und dass der Ozonierungsschritt eine Ozoneinspritzung in diese Rückführleitung (6) mittels einer zweiten Einspritzvorrichtung (5) vom Typ eines Injektors oder statischen Mischers und ohne spezifischen Kontaktor zwischen dem Ozoneinspritzpunkt und dem biologischen Reaktor (3) erfolgt, d.h. ohne eine Vorrichtung mit Gehäuse, in welchem die zu behandelnden Abwässer für eine bestimmte Dauer gehalten werden, um in Kontakt mit dem Ozon gebracht zu werden.

3. Verfahren nach Anspruch 2, **dadurch gekennzeichnet, dass** die während des Ozonierungsschritts in die Rückführleitung (6) eingespritzte Ozonmenge geringer als oder gleich zwei Gramm pro Gramm des gesamten organischen Kohlenstoffs der Abwässer ist.

4. Verfahren nach einem der Ansprüche 1 bis 3, **dadurch gekennzeichnet, dass** es ferner einen Schritt der Nachbehandlung durch Ozonierung aufweist, während welchem die aus dem biologischen Reaktor (3) austretenden Abwässer in einem Kontaktor (8) in Kontakt mit dem Ozon gebracht werden.

5. Verfahren nach Anspruch 4, **dadurch gekennzeichnet, dass** die während des Ozonierungs-Nachbehandlungsschritts in dem Kontaktor (8) in Kontakt mit den Abwässern gebrachte Ozonmenge geringer als oder gleich zwei Gramm pro Gramm des gesamten organischen Kohlenstoffs der Abwässer ist.

6. Verfahren nach Anspruch 4 oder 5, wenn auf Anspruch 2 bezogen, **dadurch gekennzeichnet, dass** es ferner Gasrückführungsschritt aufweist, während dem zumindest ein Teil des in dem Kontaktor (8) in Kontakt mit den Abwässern gebrachten Ozons in Richtung der ersten und/oder der zweiten Einspritzvorrichtung zurückgeführt wird und/oder in eine Lüftungszone des biologischen Reaktors (3) eingespritzt wird.

7. Verfahren nach einem der Ansprüche 1 bis 6, **dadurch gekennzeichnet, dass** das eingespritzte Ozon gasförmig oder gelöst ist.

8. Verfahren nach einem der Ansprüche 1 bis 7, **dadurch gekennzeichnet, dass** das Ozon in Form eines Ozon und Sauerstoff aufweisenden Gases eingespritzt wird.

## Claims

1. A wastewater treatment process comprising at least one step of aerobic biological treatment of the wastewater in a biological reactor (3), and an ozonation step comprising an injection of ozone into an inlet circuit (1) for the wastewater arranged to convey the wastewater into the biological reactor (3), the chemical oxidation with ozone thus acting in synergy with the biological oxidation within the biological reactor (3), the process being **characterized in that** :
- the injection of ozone into the wastewater inlet circuit (1) is carried out by means of a first injection device (2) of the static injector or mixer type and without a specific contactor, between the point of injection of the ozone and the biological reactor (3), i.e. without a device comprising an enclosure in which the wastewater to be treated is retained for a determined period of time in order to be brought into contact with the ozone
- the quantity of ozone injected into the wastewater inlet circuit (1) during the ozonation stage is less than or equal to two grams per gram of total organic carbon of the wastewater.

2. The process according to claim 1, **characterized in that** it furthermore comprises a separation step during which sludge is separated from the wastewater coming from the biological reactor (3), this separation step being in fact subsequent to the at least one aerobic biological treatment step, **in that** the sludge coming from this separation step is conveyed into the biological reactor (3) by a recirculation circuit (6) and **in that** the ozonation stage comprises an injection of ozone into this recirculation circuit (6) by means of a second injection device (5) of the injector or static mixer type and without a specific contactor, between the point of injection of the ozone and the biological reactor (3), i.e. without a device comprising an enclosure in which the waste water to be treated is retained for a given period of time in order to be brought into contact with the ozone.

3. The process according to claim 2, **characterized in that** the quantity of ozone injected into the recirculation circuit (6) during the ozonation stage is less than or equal to two grams per gram of total organic carbon of the wastewater.

4. The process according to any one of claims 1 to 3, **characterized in that** it further comprises a post-treatment step by ozonation during which the wastewater leaving the biological reactor (3) is brought into contact with ozone within a contactor (8).

5. The process according to claim 4, **characterized in that** the amount of ozone contacted with the wastewater in the contactor (8) during the ozonation post-treatment step is less than or equal to two grams per gram of total organic carbon of the wastewater.

6. The process according to claim 4 or 5 considered as dependent on claim 2, **characterized in that** it further comprises a gas recycling step during which at least part of the ozone brought into contact with the wastewater in the contactor (8) is recirculated to the first and/or second injection device, and/or is injected into an aeration zone of the biological reactor (3).

7. The process according to any one of claims 1 to 6, **characterized in that** the injected ozone is gaseous or dissolved.

8. The process according to any one of claims 1 to 7, **characterized in that** the ozone is injected in the form of a gas comprising ozone and oxygen.
